# EUROPÄISCHE PATENTANMELDUNG

(11) **EP 2 230 043 A1**
(43) Veröffentlichungstag der Anmeldung: **22.09.2010**
(21) Anmeldenummer: 09003791.2
(22) Anmeldetag: 16.03.2009
(51) Int. Cl.: B23K 35/30, B23K 103/06

(54) **Gussbauteil mit Schweissbrücke und Verfahren zum Herstellen des Gussbauteils**

(71) Anmelder: Siemens Aktiengesellschaft, 80333 München (DE)
(72) Erfinder: Metz, Mario, 16567 Mühlenbeck (DE); Struth, Ulrich, 45239 Essen (DE)

(57) **Zusammenfassung**

Ein Gussbauteil weist eine erste Bauteilkomponente (2) und eine zweite Bauteilkomponente (3) auf, die aus einem Gussmaterial (4, 5) hergestellt sind, wobei die erste Bauteilkomponente (2) mit einem ihrer Randabschnitte (6) und die zweite Bauteilkomponente (3) mit einem ihrer Randabschnitte (7) benachbart aneinander liegend angeordnet sind, sowie an den Außenrändern (8, 9) der Randabschnitte (6, 7) jeweils eine daran befestigte und aus einem schweißbaren Material hergestellte Schweißbrücke (10, 11) aufweisen, die mit ihrer benachbarten Schweißbrücke (11, 10) verschweißt ist, wobei die Schweißbrücken (10, 11) derart dimensioniert (16, 17) sind, dass von dem Verschweißen der Schweißbrücken (10, 11) das Gefüge des Gussmaterials (4, 5) der Bauteilkomponenten (2, 3) thermisch nicht verändert ist.

## Beschreibung

Die Erfindung betrifft ein Gussbauteil und ein Verfahren zum Herstellen des Gussbauteils, wobei das Gussbauteil insbesondere aus Sphäroguss ist.

Sphäroguss ist ein Gusseisen mit Kugelgraphit, mit dem kostengünstig serienmäßig groß dimensionierte Bauteile hergestellt werden. Beispielsweise ist herkömmlich das Gehäuse einer Dampfturbine aus Sphäroguss gefertigt. Die geometrischen Abmaße einer Dampfturbine im oberen Leistungsbereich, wie sie beispielsweise in Dampfkraftwerken zur Stromerzeugung eingesetzt wird, sind jedoch so groß, dass beim Gießen des Sphäroguss Probleme auftreten können. So ist beispielsweise die Wahrscheinlichkeit hoch, dass in einem derartigen Dampfturbinengehäuse Unregelmäßigkeiten und Fehlstellen auftreten, die die Festigkeit des Dampfturbinengehäuses beeinträchtigen. Diese Unregelmäßigkeiten und Fehlstellen können je nach Lage in dem Bauteil und Funktion der betroffenen Stellen nicht tolerabel sein. Dadurch ist die maximal zulässige Größe der Gehäusebauteile aus Sphäroguss nach oben begrenzt. Abhilfe würde ein Gehäusebauteil schaffen, das aus mehreren kleinen, gießtechnisch unkritischen Teilen zusammengesetzt ist. Voraussetzung hierfür ist allerdings, dass diese Teile miteinander verschweißt das Gehäuse bilden können. Die Teile wären über großflächige Schweißverbindungen miteinander zu verbinden, wofür ein geeignetes Schweißverfahren notwendig wäre.

Ein bekanntes Verfahren aus Sphäroguss hergestellte Bauteile miteinander zu verschweißen ist das Warmschweißen, das jedoch nur bei einer Bauteilvorwärmung im Bereich von 600°C bis 700°C und eine daran anschließende Wärmenachbehandlung durchführbar ist. Das Warmschweißen ist daher sehr aufwändig und erzeugt einen Verzug der Bauteile, so dass das Warmschweißen für eine großflächige Verbindungsschweißung von Sphäroguss unter anderem aus wirtschaftlichen Aspekten nicht geeignet ist.

Aufgabe der Erfindung ist es, ein Gussbauteil und ein Verfahren zum Herstellen des Gussbauteils zu schaffen, wobei das Gussbauteil große Ausmaße und dennoch eine hohe Festigkeit und geringe Fertigungstoleranzen hat.

Das erfindungsgemäße Gussbauteil weist eine erste Bauteilkomponente und eine zweite Bauteilkomponente auf, die aus einem Gussmaterial hergestellt sind, wobei die erste Bauteilkomponente mit einem ihrer Randabschnitte und die zweite Bauteilkomponente mit einem ihrer Randabschnitte benachbart aneinanderliegend angeordnet sind sowie an den Außenrändern der Randabschnitte jeweils eine daran befestigte und aus einem schweißbaren Material hergestellte Schweißbrücke aufweisen, die mit ihrer benachbarten Schweißbrücke verschweißt ist, wobei die Schweißbrücken derart dimensioniert sind, dass von dem Verschweißen der Schweißbrücken das Gefüge des Gussmaterials der Bauteilkomponenten thermisch nicht verändert ist.

Das erfindungsgemäße Verfahren zum Herstellen des Gussbauteils weist die Schritte auf: Fertigen der ersten und der zweiten Schweißbrücke; Bereitstellen der Gussform für die erste und die zweite Bauteilkomponente; Einlegen der ersten Schweißbrücke in die Gussform für die erste Bauteilkomponente und der zweiten Schweißbrücke in die Gussform für die zweite Bauteilkomponente; Einfüllen des flüssigen Gussmaterials in die Gussformen, so dass die Bauteilkomponenten gegossen und die erste Schweißbrücke an die erste Bauteilkomponente und die zweite Schweißbrücke an die zweite Bauteilkomponente angeformt werden; Abkühlen der Bauteilkomponenten nach dem Gießen; Verschweißen der Schweißbrücken, so dass die Bauteilkomponenten zusammengefügt sind und durch zumindest einen Teil des Gussbauteils bilden.

Durch die Herstellung der Schweißbrücken können die zu fügenden, aus nicht schweißgeeignetem Gussmaterial hergestellten Bauteilkomponenten miteinander verbunden werden, wobei an der Verschweißung der Schweißbrücken das Gussbauteil eine hohe Festigkeit und geeignete Duktilitätseigenschaften hat. Mit dem erfindungsgemäßen Verfahren können Gussbauteile mit einem großen Gewicht aus den Bauteilkomponenten mit kleinerem Gewicht fügetechnisch zusammengesetzt werden, wobei das Gussbauteil dennoch eine hohe Festigkeit und geringe Fertigungstoleranzen hat.

Das Gussmaterial ist bevorzugt Sphäroguss und beim Verschweißen der Schweißbrücken hat die Temperatur des Gussmaterials bevorzugt 600°C nicht überschritten. Bevorzugtermaßen sind die Materialstärken, mit denen die Schweißbrücken an den Außenrändern der Randabschnitte auftragen, in Abhängigkeit des Wärmeeintrags eines vorherbestimmten Schweißverfahrens und der Wärmeleitungseigenschaft des Materials der Schweißbrücken dimensioniert, wodurch beim Verschweißen der Schweißbrücken mit dem Schweißverfahren das Gussmaterial an den Außenrändern thermisch nicht verändert ist. Bevorzugt ist das Schweißverfahren ein Engspaltverfahren, insbesondere ein Wolfram-Inert-Gas-Schweißverfahren oder ein Unterpulverschweißverfahren, und die Schweißbrücken sind bevorzugt an ihren einander zugewandten Stirnseiten jeweils mit einer Nase versehen, die von derjenigen Stirnseite, an der sie angebracht sind, vorstehen und einander zugewandt angeordnet sind, wobei vom Verschweißen der Schweißbrücken mit dem Engspaltverfahren die Nasen zusammengeschweißt sind.

Alternativ ist bevorzugt das Schweißverfahren ein Hochenergieschweißverfahren, insbesondere ein Elektronenschweißverfahren oder ein Laserschweißverfahren, und die Schweißbrücken sind bevorzugt an ihren einander zugewandten Stirnseiten zusammengeschweißt. Bevorzugt ist es, dass die Schweißbrücken jeweils mit einem Vergussanker in die Randbereiche der Bauteilkomponenten eingegossen sind.

Beim Verfahren zum Herstellen des Gussbauteils ist das Schweißverfahren bevorzugt ein Engspaltverfahren, insbesondere ein Wolfram-Inert-Gas-Schweißverfahren oder ein Unterpulverschweißverfahren, und vor dem Verschweißen werden bevorzugt die Schweißbrücken an ihren einander zugewandten Stirnseiten jeweils zur Schweißnahtvorbereitung mit einer Nase versehen. Alternativ hierzu ist bevorzugt das Schweißverfahren ein Hochenergieschweißverfahren, insbesondere ein Elektronenstrahlschweißverfahren oder ein Laserschweißverfahren, und vor dem Verschweißen werden bevorzugt die Schweißbrücken an ihren einander zugewandten Stirnseiten jeweils zur Schweißnahtvorbereitung plan ausgebildet. Ferner ist es bevorzugt, dass die Schweißbrücken jeweils mit einem Vergussanker versehen sind, so dass beim Einfüllen des flüssigen Gussmaterials in die Gussform die erste Schweißbrücke an die erste Bauteilkomponente und die zweite Schweißbrücke an die zweite Bauteilkomponente durch Vergrößerung der Oberfläche sicher (Durchwärmen, Diffundieren, Verschweißen) eingegossen und metallurgisch verbinden werden.

Die Stärke der Schweißbrücken ist von der Energiedichte des gewählten Schweißverfahrens und der gewählten Schweißgeschwindigkeit abhängig. Die Stärke der Schweißnahtbrücke gesehen von den Außenrändern der Randabschnitte der Bauteilkomponenten bis zur Schweißnaht ist derart gewählt, dass maximal die Austenitisierungstemperatur des Gussmaterials der Bauteilkomponenten nicht erreicht wird. Ist beispielsweise der Gusswerkstoff EN-GJS-400-18U-RT, so sind die Schweißbrücken derart auszulegen, dass das Gussmaterial beim Verschweißen der Bauteilkomponente 600°C nicht erreicht. Das heißt, dass die 600°C-Isotherme nicht die Wärmeeinflusszone zwischen dem Material der Schweißbrücken und dem Gussmaterial überschreitet. Der Gusswerkstoff bleibt bei der schweißtechnischen Verarbeitung umwandlungsfrei, wobei die Kohlenstoffdiffusion aus den Graphitkugeln so weit verringert ist, dass keine Aufhärtung mit anschließender Rissbildung erfolgen kann. Mit den Schweißbrücken und den auf das Schweißverfahren und den Schweißparametern abgestimmten Abmessungen der Schweißbrücken wird eine fügetechnische Verarbeitung der Bauteilkomponenten bei Raumtemperatur ermöglicht und eine Rissbildung im Gusswerkstoff wird vorteilhaft vermieden. Das Material der Schweißbrücken ist bevorzugt mit dem Ausdehnungskoeffizienten des Gussmaterials abzustimmen und muss, nachdem es mit dem Gussmaterial der Bauteilkomponenten vergossen wurde, eine ausreichende Schweißeignung haben, die sich insbesondere aus der Korngröße, der chemischen Zusammensetzung und der Härte der Schweißbrücken ergibt. Beispielsweise können zur Herstellung der Schweißbrücken S 235 JRG oder andere handelsübliche Materialien verwendet werden. Die Schweißbrücke ist vorteilhaft mittels eines Stoffschlusses (metallurgische Verbindung) und bevorzugt mit einem zusätzlichen Formschluss (Vergussanker) in das Gussmaterial der Bauteilkomponenten integriert.

Die Aufteilung des Gussbauteils in vorteilhaft leichter abgießbare Bauteilkomponenten bestimmt die Lage der Schweißbrücken in dem Gusskörper. Dadurch ist bei der Herstellung der Bauteilkomponenten der Gussprozess vereinfacht und die Gussqualität verbessert. Ferner kann für das Verschweißen der Schweißbrücken das Schweißverfahren automatisiert ausgeführt werden.

Im Folgenden werden bevorzugte Ausführungsformen eines erfindungsgemäßen Gussbauteils anhand der beigefügten schematischen Zeichnungen erläutert. Es zeigen:
- Fig. 1: einen Querschnittsausschnitt des Gussbauteils einer ersten erfindungsgemäßen Ausführungsform einer Schweißbrücke,
- Fig. 2: einen Querschnittsausschnitt des Gussbauteils einer zweiten erfindungsgemäßen Ausführungsform einer Schweißbrücke und
- Fig. 3: einen Querschnittsausschnitt des Gussbauteils an einer Schweißnaht an Schweißbrücken gemäß der in Fig. 1 gezeigten Ausführungsform.

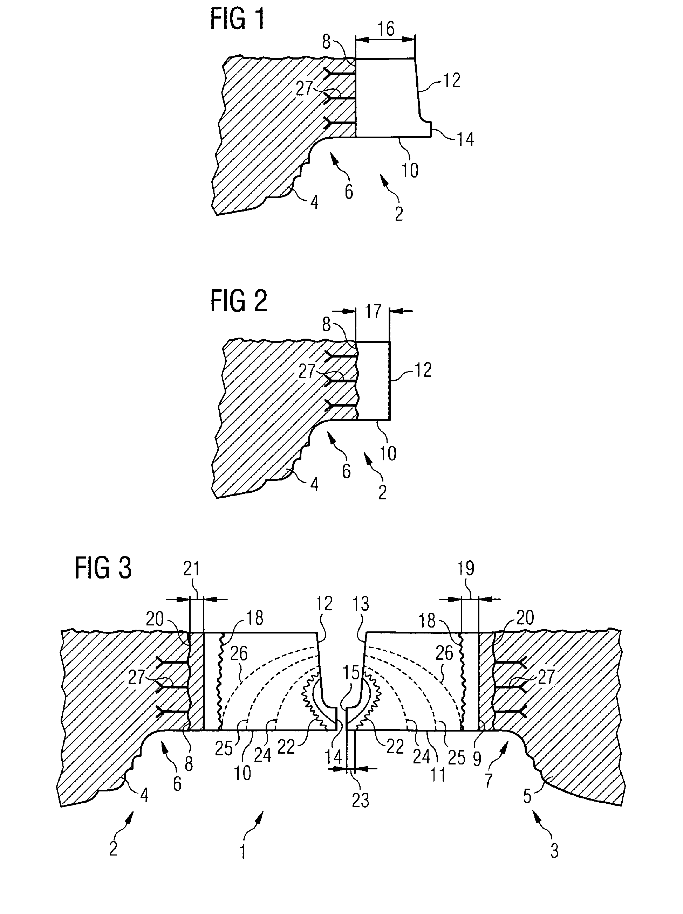

Wie es aus Fig. 1 bis 3 ersichtlich ist, weist ein Gussbauteil 1 eine erste Bauteilkomponente 2 und eine zweite Bauteilkomponente 3 auf. Die erste Bauteilkomponente 2 ist von einem ersten Gusskörper 4 und die zweite Bauteilkomponente 3 ist von einem zweiten Gusskörper 5 gebildet. Die Bauteilkomponenten 2 und 3 bilden zusammengelegt das Gussbauteil 1. Dabei liegt die erste Bauteilkomponente 2 mit ihrem Randabschnitt 6 an einem zweiten Randabschnitt 7 der zweiten Bauteilkomponente 3 an. Die Außenbegrenzung des ersten Randabschnitts 6 ist gebildet von einem ersten Außenrand 8, wobei die Außenbegrenzung des zweiten Randabschnitts 7 von einem zweiten Außenrand 9 gebildet ist. Die Randabschnitte 6, 7 sind in den Gusskörpern 4, 5 ausgebildet, wobei die Randabschnitte 8, 9 die Gusskörper 4, 5 begrenzen. An dem ersten Außenrand 8 ist eine erste Schweißbrücke 10 und an dem zweiten Außenrand 9 ist eine zweite Schweißbrücke 11 angebracht. Die erste Schweißbrücke 10 ist quasi in Verlängerung des ersten Gusskörpers 4 und die zweite Schweißbrücke 11 ist quasi in Verlängerung des zweiten Gusskörpers 5 gestaltet. Die Schweißbrücken 10, 11 sind mit ihren Stirnseiten 12, 13 einander zugewandt angeordnet.

In Fig. 1 ist eine Schweißbrücke gezeigt, die für ein Engspaltschweißen, wie beispielsweise WIG-Schweißen oder Unterpulverschweißen, geeignet ist, wobei an der ersten Stirnseite 12 eine erste Nase 14 zum Verschweißen mit der zweiten Schweißbrücke 11 vorgesehen ist, an deren zweiten Stirnseite eine äquivalente zweite Nase 15 ausgebildet ist. Die erste Dicke 16 der ersten Schweißbrücke 10 beschreibt die Stärke, via der die erste Stirnseite 12 von dem ersten Außenrand 8 im Abstand angeordnet ist. Dadurch, dass das Material der Gusskörper 4, 5 Sphäroguss ist, ist die erste Dicke 16 derart gewählt, dass beim Verschweißen der Schweißbrücken 10, 11 mit dem Engspaltschweißverfahren unter Berücksichtigung der Aufheizung der Schweißbrücke 10 beim Schweißen und der Schweißdauer beim gesamten Schweißvorgang die Temperatur am ersten Außenrand 8 600°C nicht überschritten wird. Somit ist vorteilhaft eine Gefügeveränderung am ersten Außenrand 8 in dem ersten Gusskörper 4 unterbunden.

In Fig. 2 ist die erste Schweißbrücke 10 zum Verschweißen mit beispielsweise einem Elektronenstrahl-Schweißverfahren oder einem Laser-Schweißverfahren ausgestaltet. Hierfür ist die erste Stirnseite 12 der ersten Schweißbrücke 10 plan ausgebildet und die erste Schweißbrücke 10 weist eine zweite Dicke 17 auf, die an den Temperaturverlauf in der Schweißbrücke 10 beim Elektronenstrahlschweißen bzw. Laserschweißen angepasst ist, so dass die erste Dicke 16 größer ist als die zweite Dicke 17.

In Fig. 3 sind die erste Bauteilkomponente 2 mit ihrer Schweißbrücke 10 und die zweite Bauteilkomponente 3 mit ihrer zweiten Schweißbrücke 11 nebeneinanderliegend dargestellt, wobei die Schweißbrücken 10, 11 gemäß Fig. 1 ausgestaltet sind. Im Querschnitt der Schweißbrücken 10, 11 ist die Temperaturverteilung mit Isothermen dargestellt, die den Zeitpunkt der höchsten Erwärmung der Schweißbrücken 10, 11 zeigen. In den Schweißbrücken 10, 11 ist die Grenze der ersten Wärmeeinflusszone 18 eingezeichnet, die zu den Außenrändern 8, 9 im ersten Abstand 19 angesiedelt ist. In den Gusskörpern 4, 5 ist eine zweite Wärmeeinflusszone 20 eingezeichnet, die von den Außenrändern 8, 9 im zweiten Abstand 21 entfernt liegend angeordnet ist. An den Nasen 14, 15 ist eine dritte Wärmeeinflusszone 22 eingezeichnet, dessen Abstand an der Unterseite der Schweißbrücken 10, 11 von den Stirnseiten 12, 13 von einem dritten Abstand 23 definiert ist. Der Temperaturverlauf in den Schweißbrücken 10, 11 ist durch die 1000°C-Isotherme 24, die 800°C-Isotherme 25 und die 600°C-Isotherme 26 gezeigt.

Der erste Abstand 19 ist derart definiert, dass die erste Wärmeeinflussgrenze 18 die 600°C-Isotherme 26 tangiert. Der zweite Abstand 21 gibt mit der zweiten Wärmeeinflusszonengrenze 20 den Bereich in den Gusskörpern 4, 5 an, in dem nach dem Verschweißen der Schweißbrücken 10, 11 Kohlenstoffdiffusion zu verzeichnen ist.

## Patentansprüche

1. Gussbauteil mit einer ersten Bauteilkomponente (2) und einer zweiten Bauteilkomponente (3), die aus einem Gussmaterial (4, 5) hergestellt sind,
wobei die erste Bauteilkomponente (2) mit einem ihrer Randabschnitte (6) und die zweite Bauteilkomponente (3) mit einem ihrer Randabschnitte (7) benachbart aneinander liegend angeordnet sind sowie an den Außenrändern (8, 9) der Randabschnitte (6, 7) jeweils eine daran befestigte und aus einem schweißbaren Material hergestellte Schweißbrücke (10, 11) aufweisen, die mit ihrer benachbarten Schweißbrücke (11, 10) verschweißt ist,
wobei die Schweißbrücken (10, 11) derart dimensioniert (16, 17) sind, dass von dem Verschweißen der Schweißbrücken (10, 11) das Gefüge des Gussmaterials (4, 5) der Bauteilkomponenten (2, 3) thermisch nicht verändert ist.

2. Gussbauteil gemäß Anspruch 1,
wobei das Gussmaterial (4, 5) Sphäroguss ist und beim Verschweißen der Schweißbrücken (10, 11) die Temperatur des Gussmaterials (4, 5) 600°C nicht überschritten hat.

3. Gussbauteil gemäß einem der Ansprüche 1 und 2,
wobei die Materialstärken (16, 17), mit denen die Schweißbrücken (10, 11) an den Außenrändern (8, 9) der Randabschnitte (6, 7) auftragen, in Abhängigkeit des Wärmeeintags eines vorherbestimmten Schweißverfahrens und der Wärmeleitungseigenschaft des Materials der Schweißbrücken (10, 11) dimensioniert sind,
wodurch beim Verschweißen der Schweißbrücken (10, 11) mit dem Schweißverfahren das Gussmaterial (4, 5) an den Außenrändern (8, 9) thermisch nicht verändert ist.

4. Gussbauteil gemäß Anspruch 3,
wobei das Schweißverfahren ein Engspaltverfahren, insbesondere ein Wolfram-Inert-Gas-Schweißverfahren oder ein Unterpulverschweißverfahren ist,
und die Schweißbrücken (10, 11) an ihren einander zugewandten Stirnseiten (12, 13) jeweils mit einer Nase (14, 15) versehen sind, die von derjenigen Stirnseite (12, 13), an der sie angebracht sind, vorstehen und einander zugewandt angeordnet sind,
wobei vom Verschweißen der Schweißbrücken (10, 11) mit dem Engspaltverfahren die Nasen (15, 16) zusammengeschweißt sind.

5. Gussbauteil gemäß Anspruch 3,
wobei das Schweißverfahren ein Hochenergieschweißverfahren, insbesondere ein Elektronenstrahlschweißverfahren oder ein
Laserschweißverfahren ist,
und die Schweißbrücken (10, 11) an ihren einander zugewandten Stirnseiten (12, 13) zusammengeschweißt sind.

6. Gussbauteil gemäß einem der Ansprüche 1 bis 5,
wobei die Schweißbrücken (10, 11) jeweils mit einem Vergussanker (29) in die Randabschnitte (6, 7) der Bauteilkomponenten (2, 3) eingegossen sind.

7. Verfahren zum Herstellen eines Gussbauteils (1) gemäß einem der Ansprüche 1 bis 6, mit den Schritten:
- Fertigen der ersten und der zweiten Schweißbrücke (10, 11);
- Bereitstellen der Gussformen für die erste und die zweite Bauteilkomponente (2, 3);
- Einlegen der ersten Schweißbrücke (10) in die Gussform für die erste Bauteilkomponente (2) und der zweiten Schweißbrücke (11) in die Gussform für die zweite Bauteilkomponente (4);
- Einfüllen des flüssigen Gussmaterials in die Gussformen, so dass die Bauteilkomponenten (2, 3) gegossen und die erste Schweißbrücke (10) an die erste Bauteilkomponente (2) und die zweite Schweißbrücke (11) an die zweite Bauteilkomponente (3) angeformt werden;
- Abkühlen der Bauteilkomponenten (2, 3) nach dem Gießen; Verschweißen der Schweißbrücken (10, 11), so dass die Bauteilkomponenten (2, 3) zusammengefügt sind und **dadurch** zumindest einen Teil des Gussbauteils (1) bilden.

8. Verfahren gemäß Anspruch 7,
wobei das Schweißverfahren ein Engspaltverfahren, insbesondere ein Wolfram-Inert-Gas-Schweißverfahren oder ein Unterpulverschweißverfahren ist,
und vor dem Verschweißen die Schweißbrücken (10, 11) an ihren einander zugewandten Stirnseiten (12, 13) jeweils zur Schweißnahtvorbereitung mit einer Nase (14, 15) versehen werden.

9. Verfahren gemäß Anspruch 7,
wobei das Schweißverfahren ein Hochenergieschweißverfahren, insbesondere ein Elektronenstrahlschweißverfahren oder ein
Laserschweißverfahren ist,
und vor dem Verschweißen die Schweißbrücken an ihren einander zugewandten Stirnseiten (12, 13) jeweils zur Schweißnahtvorbereitung plan ausgebildet werden.

10. Verfahren gemäß einem der Ansprüche 7 bis 9,
wobei die Schweißbrücken (10, 11) jeweils mit einem Vergussanker (29) versehen sind, so dass beim Einfüllen des flüssigen Gussmaterials in die Gussformen die erste Schweißbrücke (10) an die erste Bauteilkomponente (2) und zweite Schweißbrücke (11) an die zweite Bauteilkomponente (3) eingegossen werden.
